# EUROPÄISCHE PATENTSCHRIFT

(11) **EP 0 958 161 B1**
(45) Veröffentlichungstag und Bekanntmachung des Hinweises auf die Patenterteilung: **10.04.2002**
(21) Anmeldenummer: 98905272.5
(22) Anmeldetag: 07.01.1998
(51) Int. Cl.: B60R 25/00, E05B 49/00

(54) **CODESIGNALGEBER, INSBESONDERE FÜR EIN DIEBSTAHLSCHUTZSYSTEM EINES KRAFTFAHRZEUGS**
CODE SIGNAL TRANSMITTER, ESPECIALLY FOR AN ANTI-THEFT SYSTEM IN A MOTOR VEHICLE
TRANSMETTEUR DE SIGNAUX DE CODAGE, NOTAMMENT POUR SYSTEME ANTIVOL DANS UN VEHICULE AUTOMOBILE

(30) Priorität: 07.02.1997 EP 97102010
(43) Veröffentlichungstag der Anmeldung: 24.11.1999
(73) Patentinhaber: SIEMENS AKTIENGESELLSCHAFT, 80333 München (DE)
(72) Erfinder: SIEDENTOP, Michael, D-93073 Neutraubling (DE); SCHREY, Ulrich, D-93164 Laaber (DE)
(86) Internationale Anmeldenummer: EP9800059
(87) Internationale Veröffentlichungsnummer: WO9834818

(56) Entgegenhaltungen:
- EP-A- 0 659 963
- WO-A-96/17290
- DE-A- 4 403 655
- DE-U- 9 412 718

## Beschreibung

Die Erfindung betrifft einen Codesignalgeber, insbesondere für ein Diebstahlschutzsystem eines Kraftfahrzeugs, gemäß Oberbegriff von Anspruch 1.

Ein bekannter Codesignalgeber (EP 0 659 963 A1) weist eine Transpondereinheit auf, die ein Fragecodesignal von einer im Kraftfahrzeug angeordneten Sende- und Empfangseinheit empfängt. Mit Hilfe des Fragecodesignals wird daraufhin im Codesignalgeber ein Antwortcodesignal erzeugt und zu der Sende-und Empfangseinheit im Kraftfahrzeug zurückgesendet. Bei Berechtigung des Antwortcodesignals (Authentifikation) wird eine Wegfahrsperre des Kraftfahrzeugs gelöst.

Außerdem weist der Codesignalgeber eine von der Transpondereinheit unabhängige Fernbedieneinheit auf, die ein codiertes Steuersignal nach Betätigen eines Tastschalters erzeugt und über eine Antenne aussendet. Eine Empfangseinheit im Kraftfahrzeug empfängt das codierte Steuersignal und steuert die Zentralverriegelungsanlage, wenn das Steuersignal berechtigt ist.

Die Transpondereinheit und die Fernbedieneinheit sind dabei unabhängig voneinander auf einem Schlüsselgriff angeordnet. Jede Einheit weist dabei eine Recheneinheit auf, die jeweils das Antwortcodesignal bzw. das Steuersignal erzeugt.

Ein weiterer bekannter Codesignalgeber (WO96/17290 A1) weist entweder einer Transpondereinheit oder eine Fernbedieneinheit auf. Bei unidirektionaler Signalübertragung wird nur die Fernbedieneinheit benötigt und bei bidirektionaler Signalübertragung nur die Transpondereinheit. Damit das Abhören der übertragenen Signale erschwert wird, wird das gleiche Signal über zumindest zwei unterschiedliche Übertragungskanäle übertragen. Der Codesignalgeber weist daher zwei unterschiedliche Sender auf. Die beiden empfangenen Signale müssen korrekt sein, damit ein Sicherheitsaggregat gesteuert werden kann.

Der Erfindung liegt das Problem zugrunde, einen Codesignalgeber zu schaffen, der möglichst wenig Bauelemente aufweist und dennoch eine abhörsichere sowie fälschungssichere Authentifikation zuläßt.

Dieses Problem wird erfindungsgemäß durch die Merkmale von Patentanspruch 1 gelöst. Dabei weist ein Codesignalgeber eine einzige Verschlüsselungseinheit auf, auf die sowohl eine Fernbedieneinheit (Sendeeinheit) als auch eine Transpondereinheit zugreifen. Somit wird ein codiertes Steuersignal bzw. ein Antwortcodesignal durch die Verschlüsselungseinheit erzeugt und ausgesendet.

Vorteilhafte Ausgestaltungen der Erfindung sind in den Unteransprüchen gekennzeichnet. So ist es besonders vorteilhaft, wenn die Transpondereinheit, die Fernbedieneinheit und die Verschlüsselungseinheit als Schaltung auf einem Halbleiterchip integriert aufgebracht sind. Dadurch weist der Codesignalgeber nur geringe Abmessungen auf. Der Codesignalgeber kann einen Schwingkreis mit einer Spule und einem Kondensator aufweisen, über den Signale induktiv gesendet oder empfangen werden. Gleichzeitig weist er noch einen oder mehrere Sender auf, mit denen das codierte Steuersignal drahtlos ausgesendet wird.

Der Codesignalgeber kann einen Energiespeicher aufweisen, der drahtlos durch empfangene Energiesignale aufgeladen wird. Somit benötigt der Codesignalgeber keine Batterie, die immer wieder ausgewechselt werden muß, sobald deren Kapazität erschöpft ist.

Ausführungsbeispiele der Erfindung werden im folgenden anhand der schematischen Zeichnungen näher erläutert. Es zeigen:
- Figur 1:: ein Blockschaltbild eines erfindungsgemäßen Codesignalgebers und
- Figur 2:: ein Blockschaltbild einer Sende- und Empfangseinheit in einem Kraftfahrzeug.

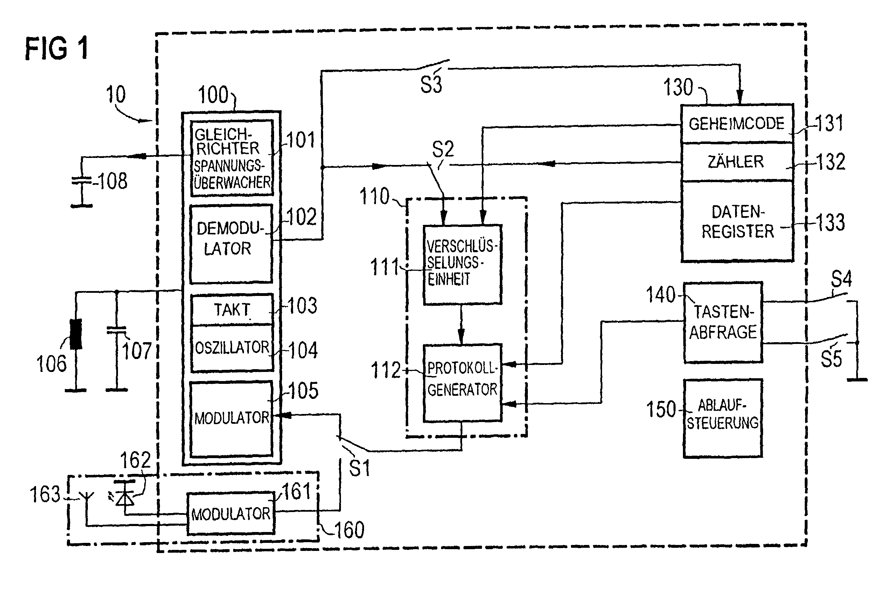

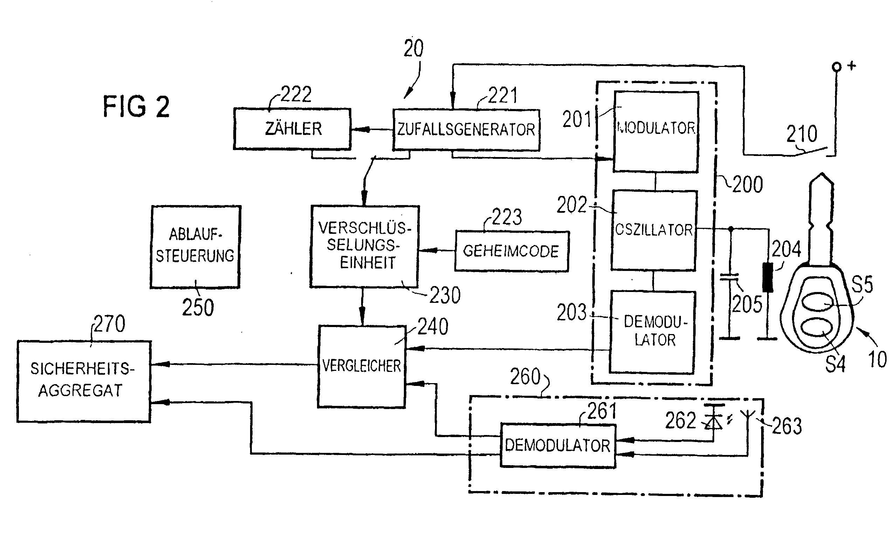

Ein erfindungsgemäßer, tragbarer Codesignalgeber 10 (Figur 1) weist eine Transpondereinheit 100, 111, 112 und 130 und eine Fernbedieneinheit (Sendeeinheit) 140, 160, S₄ und S₅, auf. Der Codesignalgeber 10 kommuniziert durch Aussenden und/oder Empfangen von Codesignalen mit einer stationär angeordneten Sende- und Empfangseinheit 20 (Figur 2). Mit Hilfe des Codesignalgebers 10 wird eine Authentifikation durchgeführt, bei deren erfolgreichem Verlauf ein Sicherheitsaggregat 270 mit einem Freigabesignal angesteuert wird.

Die Transpondereinheit des Codesignalgebers 10 weist als Sende- und Empfangselement einen Schwingkreis 106, 107 mit einer Spule 106 und einen Kondensator 107 auf. Über den Schwingkreis 106, 107 werden Signale mittels eines hochfrequenten Magnetfeldes induktiv empfangen oder ausgesendet. Hierzu weist die Transpondereinheit eine induktive Schnittstelle 100 mit einem Demodulator 102 auf, der ein empfangenes Signal demoduliert und zur weiteren Verarbeitung in ein serielles Datensignal umwandelt. Analog zu dem Demodulator 102 weist die induktive Schnittstelle 100 einen Modulator 105 auf, der ein auszusendendes Signal mit einer Trägerfrequenz moduliert und über den Schwingkreis 106, 107 aussendet.

Überdies kann die induktiven Schnittstelle 100 eine Energierückgewinnungseinheit 101 mit einem Gleichrichter und einem Spannungsüberwacher aufweisen, durch die einem empfangenen Signal im Bedarfsfalle Energie entnommen werden kann. Mit der entnommenen Energie können die Bauteile des Codesignalgebers 10 direkt mit Energie versorgt werden.

Mit der Energie kann zusätzlich ein wiederaufladbarer Energiespeicher 108 (beispielsweise in Form eines Kondensators oder eines Akkumulators) aufgeladen werden. Statt des Energiespeichers 108 kann auch eine Batterie als Energiespeicher verwendet werden, wobei diese dann ausgewechselt werden muß, sobald sie entladen ist.

Der Ladezustand des Energiespeichers 108 oder der Batterie kann durch den Spannungsüberwacher ständig überwacht werden, damit bei Bedarf sofort Energie nachgeladen bzw. auf die leere Batterie hingewiesen werden kann. Außerdem wird durch den Spannungsüberwacher die Betriebsspannung auf dem Codesignalgeber 10 überwacht, damit keine Fehler infolge von Spannungseinbrüchen vorkommen.

Die Fernbedieneinheit des Codesignalgebers 10 weist eine oder mehrere Tastschalter S₄ und S₅ auf, die von einem Benutzer dann betätigt werden, wenn dieser eine elektronische Einrichtung (im folgenden als Sicherheitsaggregat bezeichnet) fernbedienen möchte. Eine Tastenabfrageeinheit 140 erkennt, ob und welcher Tastschalter S₄ oder S₅ betätigt wurde. Des weiteren weist die Fernbedieneinheit einen Sender 160 mit Funkantennen 163 oder optischen/akustischen Sendeelementen 162 auf, denen gegebenenfalls ein Modulator 161 mit einem nachgeschalteten HF-Oszillator oder ein entsprechender Signalwandler vorgeschaltet sein können.

Bei Betätigen eines Tastschalters S₄ oder S₅ wird die Fernbedieneinheit aktiviert, sobald die Tastenabfrageeinheit 140 erkennt, daß ein Tastschalter S₄ oder S₅ betätigt wurde. Daraufhin wird in einem Protokollgenerator 112 einer Signalerzeugungseinheit 110 ein codiertes Steuersignal erzeugt, das über den Sender 160 drahtlos ausgesendet wird.

Das Steuersignal weist eine Steuerinformation auf, die wiedergibt, welcher Tastschalter S₄ oder S₅ betätigt wurde, d.h. was fernbedient werden soll. Außerdem fügt der Protokollgenerator 112 ein verschlüsseltes, binäres Signal (im folgenden als Codewort bezeichnet), das in einer Verschlüsselungseinheit 111 der Signalerzeugungseinheit 110 erzeugt wird, dem Steuersignal hinzu.

Die Verschlüsselungseinheit 111 ist mit einem Speicher 130 verbunden. Der Speicher 130 ist hier aufgeteilt in einen Geheimcodespeicher 131, in dem ein geheimer Schlüssel (im folgenden als Geheimcode bezeichnet) gespeichert ist, in einen Zähler 132, in dem Synchronisationsdaten gespeichert sind, und in ein Datenregister 133, in dem benutzerspezifische oder fahrzeugspezifische Daten gespeichert sind. Die Synchronisationsdaten und der Geheimcode werden der Verschlüsselungseinheit 111 zugeführt. Diese werden in der Verschlüsselungseinheit 111 mittels eines Verschlüsselungsalgorithmus verschlüsselt und als Codewort dem Steuersignal hinzugefügt.

Die Verschlüsselungseinheit 111 dient zum Verschlüsseln von Daten. Auf diese Verschlüsselungseinheit 111 greifen sowohl die Transpondereinheit als auch die Fernbedieneinheit zu, um jeweils das Antwortcodesignal bzw. das Steuersignal zu verschlüsseln oder um den Signalen zumindest ein Codewort hinzuzufügen.

Verschlüsselte Signale haben den Vorteil, daß aus einem oder mehreren abgehörten Signalen nicht oder nur mit sehr hohem Aufwand auf den Verschlüsselungsalgorithmus geschlossen werden kann. Bei jedem Sendevorgang wird zyklisch ein anderes Signal erzeugt und ausgesendet, so daß ein einmal abgehörtes Signal im folgenden nicht mehr für die Authentifikation benutzt werden kann, da es inzwischen nicht mehr berechtigt ist.

Der Speicher 130 ist so ausgebildet, daß der Geheimcode nur bei nachgewiesener Berechtigung überschrieben werden kann. Der Geheimcode ist von außen nicht auslesbar. Die Synchronisationsdaten sind in dem Zähler 132 des Speichers 130 gespeichert und können bei Bedarf verändert (verändern des Speicherinhalts = Zählerstand verändern) oder durch neue Synchronisationsdaten überschrieben werden.

Auf dem Codesignalgeber 10 ist eine Ablaufsteuereinheit 150 angeordnet, die alle Bauteile des Codesignalgebers 10 (induktive Schnittstelle 100, Speicher 130, Sender 160, Protokollgenerator 112, usw.) steuert. Sie ist daher mit allen Bauteilen elektrisch verbunden (der Übersichtlichkeit halber sind die elektrischen Verbindungen in der Zeichnung nicht dargestellt).

Die Ablaufsteuereinheit 130 steuert auch Schalter S₁ bis S₃ an. Abhängig von der Schaltstellung der Schalter S₁ bis S₃ laufen unterschiedliche Vorgänge auf dem Codesignalgeber 10 ab. Der Schalter S₁ schaltet den Ausgang des Protokollgenerators 112 entweder auf den Eingang des Modulators 105 (Antwortcodesignal) der induktiven Schnittstelle 100 oder zu dem Sender 160 (Steuersignal). Der Schalter S₂ führt der Verschlüsselungseinheit 111 entweder das empfangene und demodulierte Fragecodesignal oder den Speicherinhalt des Zählers 132 zu. Der Schalter S₃ ist nur dann geschlossen, wenn Daten in den Speicher 130 eingeschrieben werden sollen. Der Schalter S₃ kann dann automatisch geschlossen werden, wenn ein Fragecodesignal empfangen wird. Es kann aber auch ein Nachweis einer Berechtigung (wird der Ablaufsteuereinheit 150 durch das Fragecodesignal mitgeteilt) notwendig sein, um den Schalter S₃ zu schließen und um damit den Geheimcode oder die Synchronisationsdaten überschreiben zu können.

Die Ablaufsteuereinheit 150 wird durch einen Oszillator 104 oder eine Taktrückgewinnungseinheit 103 getaktet. Wenn nur die Fernbedieneinheit aktiviert wird, so wird zunächst der Oszillator 104 aktiviert, der dann die Ablaufsteuereinheit 150 taktet. Wenn dagegen die Transpondereinheit durch Empfangen eines Fragecodesignals aktiviert wird, so wird der Takt für die Ablaufsteuereinheit 150 durch die Taktrückgewinnungseinheit 103 aus dem von der Transpondereinheit empfangenen, magnetischen Wechselfeld entnommen.

Vorteilhafterweise wird ein solcher Codesignalgeber 10 für ein Diebstahlschutzsystem eines Kraftfahrzeugs verwendet. Dabei wird der Codesignalgeber 10 vom Benutzer mit sich getragen. Der Codesignalgeber 10 kommuniziert dann mit einer Sende- und Empfangseinheit 20 (vgl. Figur 2), die stationär in dem Kraftfahrzeug angeordnet ist.

Das Diebstahlschutzsystem umfaßt dabei als Sicherheitsaggregat 270 eine Wegfahrsperre, die zuerst durch Nachweis einer Berechtigung gelöst werden muß, bevor das Fahrzeug benutzt werden kann. Mit dem Codesignalgeber 10 können außerdem weitere Sicherheitsaggregate 270, wie eine Zentralverriegelungsanlage, die Türschlösser des Kraftfahrzeugs ver- oder entriegelt, fernbedient werden. Ferner können auch sonstige Steuergeräte fernbedient als Sicherheitsaggregate 270 gesteuert werden, durch die Funktionen wie Öffnen/Schließen von Fenstern, Einstellen der Sitze, Ein-/Ausschalten der Heizung usw., gesteuert werden.

Wenn ein Benutzer in sein Fahrzeug einsteigen möchte, so betätigt er zunächst einen Tastschalter S₄ oder S₅ auf dem Codesignalgeber 10, und zwar denjenigen, mit dem die Zentralverriegelungsanlage des Kraftfahrzeugs angewiesen wird, alle Türen und gegebenenfalls den Kofferraum zu entriegeln.

Es sei hier angenommen, daß der Tastschalter S₄ zum Entriegeln aller Türen und der Tastschalter S₅ zum Verriegeln aller Türen vorgesehen ist. Sobald das Betätigen des Tastschalter S₄ durch die Tastenabfrageeinheit 140 erkannt ist, wird in dem Protokollgenerator 112 ein Steuersignal erzeugt. Hierzu wird das Codewort von der Verschlüsselungseinheit 111 mit einer Steuerinformation (im folgenden als Steuerdaten bezeichnet) und gegebenenfalls mit Daten aus dem Datenregister 133 (im folgenden als Fahrzeugdaten bezeichnet) durch Codierung zusammengefügt. Das somit erzeugte Steuersignal wird dann moduliert oder unmoduliert zum Kraftfahrzeug gesendet.

Ein Empfänger 260 der Sende- und Empfangseinheit 20 im Kraftfahrzeug empfängt das Steuersignal über ein optisches oder akustisches Empfangselement 262 oder durch eine Funkantenne 263 und demoduliert das Steuersignal in einem Demodulator 261. Der Demodulator 261 trennt das Steuersignal in seine Bestandteile Codewort - Steuerdaten - Fahrzeugdaten auf. Das Codewort wird einer Vergleichseinheit 240 und die restlichen Daten dem Sicherheitsaggregat 270 zugeführt.

Zunächst wird anhand des empfangenen Codeworts eine Authentifikation durchgeführt. Hierzu wird das Codewort mit einem erwarteten Sollcodewort in dem Vergleicher 240 verglichen. Wenn die Authentifikation erfolgreich war, so wird ein Freigabesignal erzeugt, durch das die Inhalte der Steuerdaten und gegebenenfalls der Fahrzeugdaten durch das Sicherheitsaggregat 270 ausgeführt werden. Der Inhalt der Steuerdaten gibt an, welche Einrichtung im Kraftfahrzeug gesteuert werden soll. Im Falle des Betätigens des Tastschalters S₄ sollen alle Türen und der Kofferraum des Kraftfahrzeugs entriegelt werden.

Wenn der Benutzer mit seinem Kraftfahrzeug wegfahren möchte, so muß zunächst die Wegfahrsperre gelöst werden. Hierzu betätigt der Benutzer einen Zündschalter 210, beispielsweise durch Drehen des Zündschlüssels im Zündschloß in die Position "Zündung EIN" oder "START". Daraufhin sendet die Sende- und Empfangseinheit 20 im Kraftfahrzeug ein binäres Fragecodesignal (auch als Challenge bezeichnet) über eine induktive Schnittstelle 200 und einen Schwingkreis 204, 205 mit einer Spule 204 und einem Kondensator 205 aus. Das Fragecodesignal kann dabei zuvor entweder verschlüsselt oder aber auch als unverschlüsseltes sowie nicht codiertes Signal ausgesendet werden. In dem Fragecodesignal sind vorzugsweise die Synchronisationsdaten, insbesondere eine Zufallszahl, enthalten.

Die Transpondereinheit des Codesignalgebers 10 empfängt das Fragecodesignal. Das Fragecodesignal wird ausgewertet. Falls das Fragecodesignal ein erlaubtes Fragecodesignal war, so wird in der Verschlüsselungseinheit 111 mit Hilfe des Geheimcodes ein Codewort erzeugt, das von dem Protokollgenerator 112 zu einem binären, verschlüsseltes Antwortcodesignal (auch als Response bezeichnet) vervollständigt wird. Das Antwortcodesignal wird über den Schwingkreis 106, 107 des Codesignalgebers 10 zu dem Schwingkreis 204, 205 der Sende- und Empfangseinheit 20 im Kraftfahrzeug gesendet.

Das Antwortcodesignal wird mit Hilfe eines Demodulators 203 der induktiven Schnittstelle 200 der Sende- und Empfangseinheit 20 demoduliert und der Vergleichseinheit 240 zugeführt.

In einer Verschlüsselungseinheit 230 der Sende- und Empfangseinheit 20 wird in der Zwischenzeit ein Sollcodewort erzeugt. Hierzu wird der Verschlüsselungseinheit 230 sowohl ein Geheimcode aus einem Geheimcodespeicher 223 als auch die in einem Zufallsgenerator 221 erzeugten Synchronisationsdaten (Zufallszahl) zugeführt. Der Geheimcode sollte dabei identisch mit dem Geheimcode des Codesignalgebers 10 sein. Als Synchronisationsdatum wird die gleiche Zufallszahl verwendet, da diese mit dem Fragecodesignal zu dem Codesignalgeber 10 gesendet wurde.

Das empfangene Antwortcodesignal wird mit dem Sollcodewort verglichen. Wenn die beiden Codesignale zumindest weitgehend übereinstimmen, so wird angenommen, daß der Codesignalgeber 10 zu dem Diebstahlschutzsystem gehört und berechtigt ist, da sich in diesem Fall die beiden Geheimcodes als identisch erweisen. Die Authentifikation ist damit erfolgreich. Die Wegfahrsperre wird infolgedessen gelöst.

Sowohl im Codesignalgeber 10 als auch in der Sende- und Empfangseinheit 20 des Kraftfahrzeug werden identische Geheimcodes verwendet, um die Codesignale zu erzeugen. Der Geheimcode kann eine binäre Zahl sein, auf die ein mathematischer Verschlüsselungsalgorithmus (logische Operation wie beispielsweise eine EXOR-Verknüpfung zweier binärer Zahlen) angewendet wird. Ebenso wird die Zufallszahl zum Erzeugen des Sollcodeworts verwendet.

Der Verschlüsselungsalgorithmus kann so ausgebildet sein, daß sich die Codesignale zyklisch ändern, so daß bei jedem Erzeugen eines Codesignals ein gegenüber dem unmittelbar vorangegangenen Codesignal geändertes Codesignal erzeugt wird.

Die Länge eines Zyklus (d.h. die mögliche Wiederholbarkeit eines einmal ausgesendeten Codesignals) hängt dabei von dem Verschlüsselungsalgorithmus und den zum Verschlüsseln verwendeten Daten (Zufallszahl) ab. So können der Geheimcode beispielsweise 128 Bit und die Synchronisationsdaten 32 Bit lang sein. Damit können so viele verschiedene Codesignale erzeugt werden, daß der Aufwand unwirtschaftlich wird, das übertragene Codesignal abzuhören und alle Möglichkeiten durchzuprobieren, um auf den Geheimcode zu kommen. Somit tritt eine Wiederholung eines einmal ausgesendeten Codesignals bei Verwendung des Codesignalgebers 10 in einem Diebstahlschutzsystem in der Regel nicht auf. Die Zykluslänge kann durch längere Synchronisationsdaten oder Geheimcodes noch weiter vergrößert werden. Denn je mehr Bitstellen die Zufallszahl hat, desto komplexer und sicherer wird das Diebstahlschutzsystem.

Vorteilhafterweise ist eine binäre Zufallszahl in den Synchronisationsdaten enthalten, die bei jeder Betätigung des Zündschalters 210 durch einen Zufallsgenerator 211 von neuem zufälligerweise erzeugt wird. Diese Zufallszahl wird auch als Startwert in einem Zähler 222 gespeichert. Die Zufallszahl kann unmittelbar nach der Modulation als Fragecodesignal ausgesendet werden. Auch ist es möglich, die Zufallszahl in der Verschlüsselungseinheit 230 zu verschlüsseln und anschließend moduliert auszusenden.

Die von dem Codesignalgeber 10 empfangene Zufallszahl wird dort in dem Zähler 132 abgespeichert (eine bereits früher gespeicherte Zufallszahl wird dann überschrieben). Die Zufallszahl und der Geheimcode des Codesignalgebers 10 werden in der Verschlüsselungseinheit nach dem vorgegebenen Verschlüsselungsalgorithmus verschlüsselt. Somit wird das Codewort erzeugt.

Vorzugsweise findet beim Erzeugen des Steuersignals kein Dialog mit der Sende- und Empfangseinheit 20 stattfindet, d.h. es wird kein Fragecodesignal empfangen. Daher bleiben die bisherigen Synchronisationsdaten (Zufallszahl) gültig. Damit auch beim Erzeugen des Steuersignals ein gegenüber dem vorhergehenden Steuersignal verändertes Steuersignal ausgesendet wird, werden die Synchronisationsdaten durch den Zähler 132 ausgehend von dem Startwert (= Zufallszahl) bei jeder Betätigung eines Tastschalters S₄ oder S₅ durch In- oder Dekrementieren verändert. Der somit erhaltene Zählerstand wird nun dazu verwendet, das Codewort für das Steuersignal zu erzeugen.

Die Sende- und Empfangseinheit 20 im Kraftfahrzeug ist ähnlich wie der Codesignalgeber 10 aufgebaut. Auch dort ist die Verschlüsselungseinheit 230 vorhanden, die ebenfalls ein Codewort, und zwar das Sollcodewort erzeugt. Die Synchronisationsdaten kommen bei einem Frage-Antwort-Dialog (d.h. Aussenden des Fragecodesignals und Empfangen des Antwortcodesignals) von dem Zufallsgenerator 221. Wenn unmittelbar zuvor kein Fragecodesignal ausgesendet wurde, so kommen die Synchronisationsdaten von dem Zähler 222. Bei Empfang eines Codesignal werden die Synchronisationsdaten dazu verwendet, das Sollcodewort durch Verschlüsseln zu erzeugen. Zwischen dem Zufallsgenerator 221 und dem Zähler 222 wird je nach Bedarf von der Ablaufsteuerung 250 hin- und hergeschaltet.

Beim Frage-Antwort-Dialog wird sowohl in der Sende- und Empfangseinheit 20 als auch im Codesignalgeber 10 von der gleichen Zufallszahl ausgegangen, da die Zufallszahl zu dem Codesignalgeber 10 übertragen und dort ebenfalls gespeichert wird. Infolgedessen läuft das Diebstahlschutzsystem "synchron".

Bei Erzeugen des Steuersignal im Codesignalgeber 10 werden die Synchronisationsdaten, d.h. die Zufallszahl (= Zählerstand) durch den Zähler 132 durch In- oder Dekrementieren verändert, da ein Tastschalter S₄ oder S₅ betätigt wurde. Die Synchronisationsdaten in der Sende- und Empfangseinheit 20 hingegen bleiben zunächst unverändert, da dort das Betätigen des Tastschalters S₄ oder S₅ des Codesignalgebers 10 nicht registriert wird. Dies ist auch der Fall, wenn jemand mit dem Codesignalgeber 10 spielt und mehrmals die Tastschalter S₄ oder S₅ betätigt, ohne daß das Kraftfahrzeug in der Nähe ist.

Bei Empfang eines Steuersignals durch die Sende- und Empfangseinheit 20 wird der in dem Zähler 222 aktuell gespeicherte Zählerstand (mit einem Startwert gleich der Zufallszahl) dazu verwendet, das Sollcodewort durch Verschlüsseln zu erzeugen. Anschließend findet ein Vergleich des Sollcodeworts mit dem empfangenen Codewort des Steuersignals statt.

Falls die beiden nicht übereinstimmen, so wird der Zählerstand in der Sende- und Empfangseinheit 20 durch In- oder Dekrementieren analog zum Zählerstand im Codesignalgeber 10 verändert. Mit dem neuen Zählerstand wird durch Verschlüsseln ein weiteres Sollcodewort erzeugt. Es findet daher erneut ein Vergleich des neuen Sollcodeworts mit dem empfangenen Codewort statt. Wenn eine Übereinstimmung jetzt erkannt wird, so ist die Authentifikation erfolgreich. Ansonsten wird der Zählerstand in der Sende- und Empfangseinheit 20 erneut verändert und eine weiteres Sollcodewort erzeugt.

Falls keine Übereinstimmung durch die Vergleichseinheit 240 erkannt wird, so wird dieses Verfahren fortgesetzt, jedoch sicherheitshalber nur eine begrenzte Anzahl von Verschlüsselungsvorgängen, d.h. es findet nur eine vorgegebene, maximale Anzahl von Vergleichsvorgängen statt, innerhalb derer eine Authentifikation erfolgreich stattfinden muß. Falls keine Authentifikation erfolgreich stattfindet, so wird der Codesignalgeber 10 als nicht berechtigt erachtet.

Durch die vorgegebene Anzahl von Vergleichsvorgängen wird ein sogenannter Fangbereich erhalten. Innerhalb des Fangbereichs kann eine Authentifikation noch erfolgreich stattfinden, falls das Codewort des Steuersignals mit dem wiederholt neu erzeugten Sollcodewort übereinstimmt. Außerhalb des Fangbereichs finden keine Vergleiche des Sollcodeworts mit dem empfangenen Codewort mehr statt. Die Sende- und Empfangseinheit 20 sowie der Codesignalgeber 10 laufen dann nicht mehr "synchron".

Damit eine Authentifikation wieder möglich ist, muß dann das Diebstahlschutzsystem synchronisiert werden. Dies kann durch Aussenden des Fragecodesignals geschehen. Dabei werden die Synchronisationsdaten einerseits im Zähler 222 der Sende- und Empfangseinheit 20 gespeichert und andererseits zu dem Zähler 132 des Codesignalgebers 10 übertragen und dort gespeichert. Die neuen Synchronisationsdaten sind dann wieder Ausgangspunkt zum Verschlüsseln, d.h. zum Erzeugen des Codeworts und des Sollcodeworts.

Wenn das empfange Codewort des Steuersignals nicht innerhalb des Fangbereichs als berechtigt erkannt wird, so kann das Diebstahlschutzsystem zunächst nicht mehr elektronisch bedient werden. Damit der Benutzer dennoch sein Fahrzeug benutzen kann, werden die Türschlösser auf mechanische Betätigung mit einem Schlüssel umgeschaltet. Der Benutzer kann dann die Türen mechanisch entriegelt und in sein Fahrzeug einsteigen.

Um sein Fahrzeug zu starten, muß der Benutzer die elektronische Wegfahrsperre lösen. Hierzu steckt er den Zündschlüssel in das Zündschloß und dreht den Schlüssel, wodurch der Zündschalter 210 betätigt wird. Anschließend findet eine Frage-Antwort-Dialog zwischen dem Codesignalgeber 10 und der Sendeund Empfangseinheit 20 statt, bei dessen erfolgreichem Verlauf die Wegfahrsperre gelöst wird.

Während des Frage-Antwort-Dialogs werden in dem Zufallsgenerator 211 neue Synchronisationsdaten erzeugt und im Fragecodesignal zu dem Codesignalgeber 10 übertragen. Da die Synchronisationsdaten sowohl in der Sende- und Empfangseinheit 20 als auch in dem Codesignalgeber 10 gespeichert werden, findet auf diese Weise eine Synchronisation statt. Bei zukünftig übertragenen Steuersignalen ist nun wieder eine erfolgreiche Authentifikation möglich.

Eine Synchronisation kann auch durch ein extern anschließbares Diagnosegerät stattfinden. Dabei können sowohl der Codesignalgeber 10 als auch die Sende- und Empfangseinheit 20 an das Diagnosegerät angeschlossen werden. Bei Nachweis einer Berechtigung (beispielsweise durch Eingabe eine fahrzeugspezifische PIN-Nummer) werden neue Synchronisationsdaten sowohl in der Sende- und Empfangseinheit 20 als auch über die induktiven Schnittstellen 200 und 100 in den Speicher des Codesignalgebers 10 gespeichert. Über das Diagnosegerät kann die Sende- und Empfangseinheit 20 auch dazu aufgefordert werden, die Synchronisationsdaten über die induktiven Schnittstellen 200 und 100 zu dem Codesignalgeber 10 zu übertragen, damit sie dort gespeichert werden.

Die Transpondereinheit 100 und 130, die Fernbedieneinheit 140 und 112 sowie die Verschlüsselungseinheit 111 sind vorteilhafterweise als integrierte Schaltung auf einem (Si-)Halbleiterchip ausgebildet. Dadurch werden die mechanischen Abmessungen des Codesignalgebers 10 sehr klein. Alle Teile, die als integrierte Schaltung auf dem Halbleiterchip angeordnet sind, sind in der Figur 1 durch einen gestrichelt dargestellten Rahmen umfaßt. Außerhalb des Halbleiterchip sind die Tastschalter S₄ und S₅, der Energiespeicher 108, der Schwingkreis 106 und 107 sowie das optische oder akustische Sendeelement 162 und die Funkantenne 163 angeordnet. Diese Bauteile sind selbstverständlich alle mit dem Halbleiterchip elektrisch verbunden.

Über den Schwingkreis 106, 107 wird das Fragecodesignal oder das Antwortcodesignal in Form eines hochfrequenten Magnetfeldes empfangen bzw. gesendet. Aus dem Magnetfeld kann dabei mit Hilfe der Taktrückgewinnungseinheit 103 der Takt für die Ablaufsteuereinheit 150 gewonnen werden.

Das Fragecodesignal kann auch dazu benutzt werden, Energie zu dem Codesignalgeber 10 zu übertragen. Hierzu wird die in der Spule 106 induzierte Spannung beim Empfang des Fragecodesignals in dem Gleichrichter gleichgerichtet. Die so entstandene Gleichspannung kann dazu verwendet werden, den Energiespeicher 108 aufzuladen oder alle Bauelemente des Codesignalgebers 10 direkt mit Energie zu versorgen. Wenn der Energiespeicher 108 weitgehend geladen ist, so wird die Aufladung vorläufig beendet. Dies wird durch die Spannungsüberwachungseinheit überwacht. Wenn die Energie im Energiespeicher 108 unter einen Schwellwert abgesunken ist, so wird der Energiespeicher 108 wieder aufgeladen.

Das Fragecodesignal, das Antwortcodesignal und das Steuersignal sind digitale Signale in binärer Form. Die logischen Zustände 0 und 1 von solchen Signalen haben Pegel L (Low) und H (High). Die für den Codesignalgeber 10 benötigte Energie kann in dem Fragecodesignal oder in separat übertragenen Energiesignalen enthalten sein. Zur Energieübertragung weist das Fragecodesignal vorteilhafterweise sowohl im H als auch im L-Pegel Spannungsamplituden größer 0V auf.

Die Signale können amplituden-, frequenz-, phasenmoduliert oder auf eine sonstige Modulationsart moduliert sein. Üblicherweise werden das Fragecodesignal und das Antwortcodesignal bei einer Trägerfrequenz von etwa 125 kHz induktiv übertragen und das Steuersignal bei einer Trägerfrequenz von etwa 433 MHz per Funk ausgesendet.

Das Steuersignal kann auch optisch oder akustisch übertragen werden. Es kann auch gleichzeitig sowohl per Funk als auch optisch ausgesendet werden. Das Steuersignal muß nicht unbedingt moduliert übertragen werden. In einem solchen Fall wird das Steuersignal über einen Oszillator (statt des Modulators 161) unmittelbar der Funkantenne 163 oder dem optischen oder akustischen Sendeelement 162 zugeführt.

Selbstverständlich können auch andere Trägerfrequenzen verwendet werden, um die Signale moduliert zu übertragen. Die Signale können auch parallel bei zumindest zwei verschiedenen Trägerfrequenzen übertragen werden. Die Sendeleistung des Fragecodesignal kann auf den Energiebedarf des Codesignalgebers 10 eingestellt werden. Über die Sendeleistung kann auch die Reichweite der übertragenen Signale eingestellt werden. Die Reichweite kann auch über andere Parameter, wie Übertragungsart, Trägerfrequenz, usw. eingestellt werden.

Binäre Signale werden mit einer vorgegebenen elektrischen Signalform, wie zum Beispiel NRZ-, RZ oder Biphase-Format, übertragen werden. Für die Anwendung von drahtlosen Datenübertragungen in der Kraftfahrzeugtechnik hat sich das Biphase-Format als vorteilhaft herausgestellt. Es wird auch als Manchester-Code bezeichnet. Dabei werden die Signale mit den binären Werten 0 und 1 durch Impulse der Länge T/2 dargestellt. Ein Signal mit dem Wert 1 wird mit einem Impuls in der ersten Hälfte der Periodendauer T und ein Signal mit dem Wert 0 durch einen Impuls in der zweiten Hälfte übertragen.

Alle übertragenen Signale können durch Startbits, Stopbit oder Paritätsbits erweitert werden. Dadurch wird die Übertragung sicherer. Die Signalform und der Aufbau eines übertragenen Datenworts (Protokoll) wird durch den Protokollgenerator 112 eingestellt. Der Protokollgenerator 112 fügt außerdem die von der Tastenabfrageeinheit 140 oder dem Datenregister 133 erhaltenen Daten zu dem in der Verschlüsselungseinheit 111 erzeugten Codewort hinzu.

Der Speicher 130 kann aus mehreren E²PROM bestehen. Sicherheitshalber ist der Geheimcode von außen nicht auslesbar. Der Geheimcode ist nur bei nachgewiesener Berechtigung überschreibbar. Bei Nachweis der Berechtigung wird der Schalter S₃ von der Ablaufsteuereinheit 150 geschlossen und ein von dem Schwingkreis 106, 107 empfangener, neuer Geheimcode in den Geheimcodespeicher 131 eingeschrieben. Als Nachweis einer Berechtigung, d.h. zum Schließen des Schalters S₃ und zum Einschreiben eines neuen Geheimcodes, kann es vorgesehen sein, daß eine bestimmter Tastschalter S₄ oder S₅ des Codesignalgebers 10 beispielsweise für eine vorgegebene Zeitdauer oder mehrere Male hintereinander in einem vorgegebenen Rhythmus betätigt wird.

Vorteilhafterweise ist das Fragecodesignal lediglich eine in dem Zufallsgenerator 211 der Sende- und Empfangseinheit 20 erzeugte binäre Zufallszahl mit beispielsweise 32 Bit Länge, die in den Zählern 222 und 132 gespeichert ist. Der Zählerstand des Zählers 132 wird bei Betätigen eines Tastschalter S₄ oder S₅ um eins in- oder dekrementiert wird.

In dem Datenregister 133 können benutzer- oder fahrzeugspezifische Daten gespeichert sein. Ebenso können Diagnosedaten während des Betriebs des Fahrzeugs über die induktiven Schnittstellen 100 und 200 in das Datenregister 133 eingeschrieben werden. Allerdings muß dann der Codesignalgeber 10 möglichst nahe der Sende- und Empfangseinheit 20 sein. Dies ist dann der Fall, wenn der Codesignalgeber 10 auf dem Griff des Zündschlüssels angeordnet ist und der Zündschlüssel im Zündschloß steckt sowie die Spule 204 der Sende- und Empfangseinheit 20 um das Zündschloß angeordnet ist.

Diagnosedaten, insbesondere Fehlerdaten, werden durch eine fahrzeuginterne Diagnoseeinheit (On-board-Diagnose) ständig während des Betriebs des Kraftfahrzeugs erfaßt und über die induktiven Schnittstellen 100 und 200 in das Datenregister 133 eingeschrieben. Eine Zentrale kann diese Diagnosedaten von außen über den Empfänger 260 im Kraftfahrzeug und über die induktiven Schnittstellen 100 und 200 aus dem Speicher 130 des Codesignalgebers 10 abrufen. Die Diagnosedaten können dann entweder über die induktiven Schnittstellen 100 und 200 oder über den Sender 160 des Codesignalgebers 10 drahtlos zu der Zentrale ausgesendet werden.

Eine solche Zentrale kann sich beispielsweise in einem Fahrzeug der Verkehrsüberwachung (Polizei) befinden, die die Diagnosedaten von vorbeifahrenden Fahrzeugen auf Einhaltung von Grenzwerten (wie unzulässige hohe Schadstoffwerte im Abgas) überwacht.

In den Verschlüsselungseinheiten 111 und 130 werden Daten mit einem Verschlüsselungsalgorithmus verschlüsselt. Wenn der Verschlüsselungsalgorithmus geheim ist, d.h. er kann von außen nicht ausgelesen werden, so wird der Geheimcode nicht unbedingt benötigt. Ist dagegen der Verschlüsselungsalgorithmus von außen relativ leicht zugänglich, so wird der Geheimcode benötigt, um Daten sicher zu verschlüsseln.

Die Verschlüsselungseinheiten 111 und 230 können hardwaremäßig als festverdrahtete, rückgekoppelte Schieberegister ausgebildet sein. Die Verschlüsselungseinheiten 111, 230 können auch als Mikroprozessoren oder als Kryptoprozessoren ausgebildet sein.

Für die Erfindung ist es unwesentlich, auf welche Weise Daten verschlüsselt werden. Bei der Verschlüsselung wird ein Klartext in der Verschlüsselungseinheit mit Hilfe des Verschlüsselungsalgorithmus und gegebenenfalls mit Hilfe des Geheimcodes auf einen Chiffretext (Steuersignal, Codesignale) abgebildet. Die Umkehrabbildung wird als Entschlüsselung bezeichnet. Zum Verschlüsseln oder Entschlüsseln können verschiedene Verfahren verwendet werden.

Zum Ver- oder Entschlüsseln können auch kryptographische Verfahren, wie z.B. symmetrische oder asymmetrische Verfahren verwendet werden. Bei kryptographischen Verfahren werden die verschlüsselten Daten auf der Gegenseite wieder entschlüsselt, damit sie als Klartext vorliegen. Für die Authentifikation genügt es jedoch, wenn die Daten auf beiden Seiten nur verschlüsselt und die beiden Ergebnisse miteinander verglichen werden. Bei Übereinstimmung ist sichergestellt, daß ein berechtigter Codesignalgeber 10 ein Codewort ausgesendet hat. Hierzu kann entweder festgestellt werden, ob der Verschlüsselungsalgorithmus oder der geheime Schlüssel auf beiden Seiten identisch ist oder ob das empfangene Codewort korrekt ist. Eine Entschlüsselung wird daher nicht unbedingt benötigt.

Bei den kryptographischen Verfahren können öffentliche (public key) oder auch geheime Schlüssel (secret key = Geheimcode) zum Ver- und Entschlüsseln verwendet werden. Hierzu werden sogenannte Kryptoprozessoren verwendet. Allen Verschlüsselungsverfahren ist gemeinsam, daß ein "Knacken" der übertragenen, verschlüsselten Signale durch Abhören der Datenkommunikation und das Auswerten der Daten nur mit unvertretbar hohen Aufwand möglich ist. Somit eignen sich solche Verschlüsselungsverfahren vorzugsweise für ein Diebstahlschutzsystem eines Kraftfahrzeugs.

Der Codesignalgeber 10 kann beispielsweise auf eine Schlüsselgriff eines Tür- oder Zündschlüssels angeordnet sein.

Ebenso eignet sich eine Chipkarte oder eine sogenannte Smart Card dazu, den Codesignalgeber 10 aufzunehmen. Ein Benutzer kann den Codesignalgeber 10 bequem bei sich tragen, da er sehr klein ausgebildet ist. Je nach Anforderung kann der Codesignalgeber 10 mehr oder weniger Tastschalter S₄, S₅ aufweisen. So kann je nach Anforderung ein Tastschalter zum Verriegeln aller Türen, ein anderer Tastschalter zum Entriegeln nur einer Tür, ein Tastschalter zum Verriegeln aller Türen, ein Tastschalter zum Aussenden eines Notrufs, ein Tastschalter zum Ver-/Entriegeln des Kofferraums, ein Tastschalter zum Öffnen/Schließen der Fenster/Schiebedach/Verdeck ein Tastschalter zum Entriegeln der Türen eines Gebäudes, ein Tastschalter zum Einschalten der Beleuchtung des Gebäudes, ein Tastschalter zum Öffnen der Garage, usw. vorhanden sein.

Mit diesem erfindungsgemäßen Codesignalgeber 10 wird keine eigene Codier- oder Verschlüsselungseinheit zum Erzeugen des Steuersignals benötigt. Sowohl die Transpondereinheit als auch die Fernbedieneinheit greifen auf dieselbe Verschlüsselungseinheit 111 zu.

Der erfindungsgemäße Codesignalgeber 10 kann nicht nur für ein Diebstahlschutzsystem eines Kraftfahrzeugs verwendet werden, sonder auch für andere Anwendungen, bei denen eine Authentifikation mit einem Frage-Antwort-Dialog zwischen zwei Einheiten (bidirektionale Kommunikation) und eine unidirektionale Fernsteuerung stattfinden.

Unter dem Begriff "Wegfahrsperre" sind alle Vorrichtungen im Kraftfahrzeug zu verstehen, die ein Benutzen des Kraftfahrzeug verhindern können. Diese Vorrichtungen werden nur dann freigegeben, wenn zuvor eine Authentifikation erfolgreich stattgefunden hat. In eine Wegfahrsperre kann beispielsweise ein Motorsteuergerät, eine Absperrventil für die Kraftstoffzufuhr, ein Schalter zum Zuschalten der Batterie, ein Getriebesteuergerät, ein Schalter zum Einschalten des Zündkreises, ein Bremssteuergerät, die Lenkung, usw. einbezogen werden.

Unter dem Begriff "Transpondereinheit" ist eine Vorrichtung zu verstehen, die ein Signal empfängt und daraufhin automatisch ein Signal zurücksendet.

Das Fragecodesignal, das Antwortcodesignal und das Steuersignal sind Codesignale, die jeweils ein Codewort aufweisen. Das Codewort ist ein binär codiertes Signal, das viele Bitstellen aufweist. Durch das Verschlüsseln ändert sich das Codewort bei jedem neuen Verschlüsselungsvorgang. Dem Codewort können mehrere Bit vorausgehen oder nachfolgen, die gegebenenfalls zu einer sicheren Datenübertragung benötigt werden. Das Codewort wird mit einem Sollcodewort verglichen.

## Patentansprüche

1. Codesignalgeber (10), insbesondere für ein Diebstahlschutzsystem eines Kraftfahrzeugs, der aufweist:
- eine Transpondereinheit (100, 130), die ein Fragecodesignal von einer stationär angeordneten Sende- und Empfangseinheit (20) empfängt und daraufhin mit Hilfe des Fragecodesignals ein Antwortcodesignal erzeugt und an die Sende- und Empfangseinheit (20) zur Durchführung einer Authentifikation, bei deren erfolgreichem Verlauf ein Sicherheitsaggregat (270) mit einem Freigabesignal angesteuert wird, zurücksendet,
- eine von der Transpondereinheit unabhängige Sendeeinheit (140, 160, S4, S5), die ein durch Betätigen eines Schaltelements (S4, S5) ausgelöstes Steuersignal zu der stationär angeordneten Sende- und Empfangseinheit (20) drahtlos aussendet, das bei Berechtigung sonstige Steuergeräte fernbedient, und
- eine einzige Signalerzeugungseinheit (110), auf die sowohl die Sendeeinheit (140, 160, S4, S5) als auch die Transpondereinheit (100, 130) zur Erzeugung des Steuersignals bzw. des Antwortcodesignals zugreifen.

2. Codesignalgeber nach Anspruch 1, **dadurch gekennzeichnet, daß** er eine Steuereinheit (150) aufweist, die die Transpondereinheit und die Sendeeinheit abhängig von einem empfangenen Fragecodesignal bzw. dem Betätigen des Schaltelements (S4, S5) steuert.

3. Codesignalgeber nach einem der vorhergehenden Ansprüche, **dadurch gekennzeichnet, daß** die Transpondereinheit (100, 130), die Sendeeinheit (140, 160) und die Signalerzeugungseinheit (110) als Schaltung auf einem Halbleiterchip integriert aufgebracht sind.

4. Codesignalgeber nach einem der vorhergehenden Ansprüche, **dadurch gekennzeichnet, daß** die Transpondereinheit (100, 130) einen Schwingkreis mit einer Spule (106) und einem Kondensator (107) zum induktiven Senden des Antwortcodesignals und zum induktiven Empfangen des Fragecodesignals aufweist.

5. Codesignalgeber nach einem der vorhergehenden Ansprüche, **dadurch gekennzeichnet, daß** die Sendeeinheit eine Funkantenne (163) aufweist, über die das Steuersignal von einem Modulator (161) und einem HF-Oszillator kommend per Funk ausgesendet wird.

6. Codesignalgeber nach einem der vorhergehenden Ansprüche, **dadurch gekennzeichnet, daß** die Sendeeinheit einen optischen Sender (162) aufweist, mit dem das Steuersignal optisch ausgesendet wird.

7. Codesignalgeber nach einem der vorhergehenden Ansprüche, **dadurch gekennzeichnet, daß** der Codesignalgeber (10) eine Speichereinheit (130, 131) aufweist, in die Daten eingeschrieben, aber keine Daten von außen ausgelesen werden können.

8. Codesignalgeber nach einem der vorhergehenden Ansprüche, **dadurch gekennzeichnet, daß** in der Speichereinheit (130) Synchronisationsdaten gespeichert sind, die der Signalerzeugungseinheit (110) zum Erzeugen des Antwortcodesignals oder des Steuersignals zugeführt werden, wobei die Synchronisationsdaten in dem Fragecodesignal zu dem Codesignalgeber (10) übertragen werden und mit denen die bisher gesgeicherten Synchronisationsdaten überschrieben werden.

9. Codesignalgeber nach einem der vorhergehenden Ansprüche, **dadurch gekennzeichnet, daß** er eine Taktrückgewinnungseinheit (103) aufweist, die einen Takt für die Steuereinheit (150) aus dem empfangenen Fragecodesignal zurückgewinnt.

10. Codesignalgeber nach Anspruch 1, **dadurch gekennzeichnet, daß** er für ein Diebstahlschutzsystem eines Kraftfahrzeugs verwendet wird, wobei die Sende- und Empfangseinheit (20) stationär im Kraftfahrzeug angeordnet ist und eine Signalerzeugungseinheit (230) aufweist, die ein Sollcodesignal nach dem gleichen Algorithmus wie in der Signalerzeugungseinheit (110) des Codesignalgebers (10) erzeugt, wobei das empfangene Antwortcodesignal bzw. das empfangene Steuersignal mit dem Sollcodesignal verglichen wird und bei zumindest weitgehender Übereinstimmung ein Freigabesignal erzeugt wird, durch das ein Sicherheitsaggregat (270) im Kraftfahrzeug gesteuert wird.

## Claims

1. Coded signal generator (10), particularly for a motor vehicle anti-theft system, comprising:
- a transponder unit (100, 130) which receives a challenge signal from a fixed transceiver unit (20) and then uses the challenge signal to generate a response signal which it transmits back to the transceiver unit (20) to perform authentication which, if successful, causes a security unit (270) to be activated with an enable signal,
- a transmitting unit (140, 160, S4, S5), independent of the transponder unit, which wirelessly transmits a command signal initiated by actuation of a switching element (S4, S5) to the fixed transceiver unit (20), said signal, if authenticated, remotely controlling other control units, and
- a single signal generating unit (110) which is accessed both by the transmitting unit (140, 160, S4, S5) and the transponder unit (100, 130) to generate the command signal and the response signal respectively.

2. Coded signal generator according to Claim 1, **characterised in that** it has a control unit (150) which controls the transponder unit and the transmitting unit depending on a received challenge signal or actuation of the switching element (S4, S5).

3. Coded signal generator in accordance with one of the preceding claims, **characterised in that** the transponder unit (100, 130), the transmitting unit (140, 160) and the signal generating unit (110) are integrally mounted as a circuit on a semiconductor chip.

4. Coded signal generator in accordance with one of the preceding claims, **characterised in that** the transponder unit (100, 130) has a resonant circuit having an inductor (106) and a capacitor (107) for inductively transmitting the response signal and inductively receiving the challenge signal.

5. Coded signal generator in accordance with one of the preceding claims, **characterised in that** the transmitting unit has a radio antenna (163) via which the command signal from a modulator (161) and an RF oscillator is transmitted by radio.

6. Coded signal generator in accordance with one of the preceding claims, **characterised in that** the transmitting unit has an optical transmitter (162) with which the command signal is optically transmitted.

7. Coded signal generator in accordance with one of the preceding claims, **characterised in that** said coded signal generator (10) has a memory unit (130, 131) to which data can be written but from which no data can be read out externally.

8. Coded signal generator in accordance with one of the preceding claims, **characterised in that** the memory unit (130) is used to store synchronisation data which is fed to the signal generating unit (110) to generate the response signal or the command signal, said synchronisation data being transmitted to the coded signal generator (10) in the challenge signal and overwriting the previously stored synchronisation data.

9. Coded signal generator in accordance with one of the preceding claims, **characterised in that** it has a clock recovery unit (103) which recovers a clock signal for the control unit (150) from the received challenge signal.

10. Coded signal generator according to Claim 1, **characterised in that** it is used for a motor vehicle anti-theft system, whereby the transceiver unit (20) is mounted in a fixed location in the vehicle and has a signal generating unit (230) which generates a nominal coded signal according to the same algorithm as in the signal generating unit (110) of the coded signal generator (10), the received response signal or the received command signal being compared with the nominal coded signal and, if they at least largely match, an enable signal being generated by which a security unit (270) in the vehicle is controlled.

## Revendications

1. Générateur de signaux de code (10), en particulier pour un système de protection antivol d'un véhicule automobile, qui comprend :
- une unité transpondeur (100, 130) qui reçoit un signal de code d'interrogation provenant d'une unité d'émission et de réception (20) montée fixe et, en réponse, produit à l'aide du signal de code d'interrogation un signal de code de réponse et le renvoie à l'unité d'émission et de réception (20) pour l'exécution d'une authentification à la suite du déroulement réussi de laquelle un groupe de sécurité (270) est piloté avec un signal de déblocage,
- une unité d'émission (140, 160, S4, S5) indépendante de l'unité transpondeur, qui transmet sans fil à l'unité d'émission et de réception (20) montée fixe, un signal de commande déclenché par l'actionnement d'un élément de commutation (S4, S5) et qui, en cas de validation, télécommande d'autres appareils de commande et,
- une unique unité de production de signaux (110) à laquelle aussi bien l'unité d'émission (140, 160, S4, S5) que l'unité transpondeur (100, 130) ont accès pour la production du signal de commande ou du signal de code de réponse.

2. Générateur de signaux de code selon la revendication 1, **caractérisé en ce qu'**il comprend une unité de commande (150) qui commande l'unité transpondeur et l'unité d'émission en fonction d'un signal de code d'interrogation reçu ou en fonction de l'actionnement de l'élément de commutation (S4, S5).

3. Générateur de signaux de code selon l'une des revendications précédentes, **caractérisé en ce que** l'unité transpondeur (100, 130), l'unité d'émission (140, 160) et l'unité de production de signaux (110) sont montés de façon intégrée sous la forme d'un circuit sur une plaquette de semi-conducteur.

4. Générateur de signaux de code selon l'une des revendications précédentes, **caractérisé en ce que** l'unité transpondeur (100, 130) comprend un circuit oscillant possédant une bobine (106) et un condensateur (107) pour l'émission inductive du signal de code de réponse et pour la réception inductive du signal de code d'interrogation.

5. Générateur de signaux de code selon l'une des revendications précédentes, **caractérisé en ce que** l'unité d'émission présente une antenne radio (163) au moyen de laquelle le signal de commande est émis par radio en provenance d'un modulateur (161) et d'un oscillateur HF.

6. Générateur de signaux de code selon l'une des revendications précédentes, **caractérisé en ce que** l'unité d'émission présente un émetteur optique (162) avec lequel le signal de commande est émis par voie optique.

7. Générateur de signaux de code selon l'une des revendications précédentes, **caractérisé en ce que** le générateur de signaux de code (10) présente une unité de mémoire (130, 131) dans laquelle des données sont inscrites mais dans laquelle aucune donnée ne peut être lue de l'extérieur.

8. Générateur de signaux de code selon l'une des revendications précédentes, **caractérisé en ce que**, dans l'unité de mémoire (130) sont mémorisées des données de synchronisation qui sont transmises à l'unité de production de signaux (110) pour la production du signal de code de réponse ou du signal de commande, les données de synchronisation contenues dans le signal de code d'interrogation étant transmises au générateur de signaux de code (10) et les données de synchronisation mémorisées jusqu'à présent pouvant être écrasées par ces données.

9. Générateur de signaux de code selon l'une des revendications précédentes, **caractérisé en ce qu'**il comprend une unité de récupération du rythme (103) qui récupère un rythme pour l'unité de commande (150) dans le signal de code d'interrogation reçu.

10. Générateur de signaux de code selon la revendication 1, **caractérisé en ce qu'**il est utilisé pour un système de protection antivol d'un véhicule automobile, l'unité d'émission et de réception (20) étant disposée fixe dans le véhicule automobile et présentant une unité de production de signaux (230) qui produit un signal de code de consigne d'après le même algorithme que dans l'unité de production de signaux (110) du générateur de signaux de code (10), le signal de code de réponse reçu ou le signal de commande reçu étant comparé au signal de code de consigne et un signal de déblocage étant produit en présence d'une concordance au moins notable, signal par lequel un groupe de sécurité (270) monté dans le véhicule est commandé.
